(19) Europäisches Patentamt
European Patent Office
Office européen des brevets

(11) Numéro de publication: 0 018 896
B1

(12) **FASCICULE DE BREVET EUROPEEN**

(45) Date de publication du fascicule du brevet: 17.11.82

(51) Int. Cl.³: C 01 B 15/12

(21) Numéro de dépôt: 80400559.3

(22) Date de dépôt: 25.04.80

(54) **Procédé de fabrication de perborate de sodium.**

(30) Priorité: 03.05.79 FR 7911090

(43) Date de publication de la demande:
12.11.80 Bulletin 80/23

(45) Mention de la délivrance du brevet:
17.11.82 Bulletin 82/46

(84) Etats contractants désignés:
BE CH DE FR GB IT LI NL SE

(56) Documents cités:
DE - B - 1 028 545
DE - B - 1 060 849
DE - B - 1 240 508
FR - A - 2 169 273
FR - A - 2 255 255
FR - A - 2 282 403
FR - A - 2 355 774
FR - A - 2 386 477
GB - A - 944 121

(73) Titulaire: L'AIR LIQUIDE, SOCIETE ANONYME POUR L'ETUDE ET L'EXPLOITATION DES PROCEDES GEORGES CLAUDE
75, Quai d'Orsay
F-75321 Paris Cedex 07 (FR)

(72) Inventeur: Malafosse, Jean
Chemin des Montagnes
F-38360 Sassenage (FR)
Inventeur: Girou, André
43, rue Monplaisir
F-31400 Toulouse (FR)
Inventeur: Olivier, Hervé
La Crée
F-21590 Santenay les Bains (FR)
Inventeur: Dupont, Michel
rue de l'Eglise
F-71150 Chagny (FR)

(74) Mandataire: Bouton Neuvy, Liliane et al,
L'Air liquide, Société Anonyme pour L'Etude et L'Exploitation des Procédés Georges Claude 75, Quai d'Orsay
F-75321 Paris Cedex 07 (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 018 896 B1

Procédé de fabrication de perborate de sodium

La présente invention concerne un procédé de fabrication de perborate de sodium, en particulier en vue de la production d'une structure améliorée correspondant aux exigences commerciales actuelles.

Le perborate de sodium s'obtient industriellement par addition de peroxyde d'hydrogène à une solution de métaborate de sodium, à une température voisine de 20°C, selon des méthodes de fabrication continue ou discontinue. C'est un peroxyde de formule:

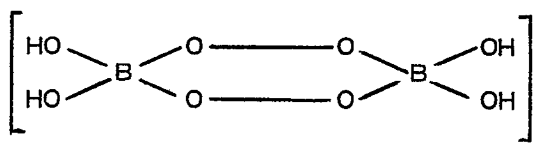 $Na_2$, $6H_2O$

Afin d'obtenir un bon rendement par rapport au peroxyde d'hydrogène et un perborate chimiquement stable, on conduit la fabrication en présence de sel de magnésium. On sait que le cation $Mg^{++}$ est un bon stabilisant de l'oxygène actif peroxydique en milieu alcalin: mais cet additif a une action néfaste sur la cristallisation du perborate de sodium. Le cation magnésium modifie l'aspect cristallin du perborate de sodium, en favorisant la formation de plaquettes d'épaisseur de plus faible en fonction de l'accroissement de la concentration en $Mg^{++}$. Ces plaquettes s'agglomèrent en édifices désordonnés très fragiles. En conséquence, les caractéristiques physiques du perborate de sodium ne correspondent pas à un produit commercial valable pour lequel la demande du marché est actuellement orientée vers des cristaux denses et mécaniquement résistants.

Le brevet français no 2.169.273 signale l'intérêt de certains polyélectrolytes, notamment des polymères de l'acide métacrylique et de l'acide acrylique, ainsi que les copolymères de ces deux acides, dans la conduite de la cristallisation du perborate de sodium.

Et, dans le procédé de préparation du percarbonate de sodium sous forme de cristaux rhomboédriques réguliers, selon le brevet français no. 2.355.774, la cristallisation est conduite en présence d'un modificateur de cristallisation qui est notamment un polymère polycarboxylique, tel les copolymères de l'anhydride maléïque ou des acides maléïque et fumarique avec l'éthylène, le propylène, l'isobutylène, le styrène, l'éther méthyl vinylique ou le furanne. Toutefois, on sait qu'en phase solide il n'y a pas équivalence entre la stabilisation de l'anion peroxyborate et celui du percarbonate.

On a recherché un modificateur de cristallisation qui pallie l'effet fragilisant du magnésium, tout en permettant l'obtention d'une cristallisation compacte, et de ce fait, une résistance mécanique et une densité apparente du perborate de sodium qui répondent aux spécifications des lessiviers.

Il a été trouvé une classe de modificateurs de cristallisation particulièrement adaptée au perborate de sodium et qui, de manière inattendue, supprime l'action fragilisante du cation magnésium dont la présence est indispensable pour la stabilité chimique du composé peroxydé et conduit à l'obtention de cristaux de forte densité apparente, de bonne résistance à l'abrasion et de dimension granulométrique resserrée et relativement élevée.

On a même constaté qu'en présence de certains de ces modificateurs, la cristallisation est orientée vers une forme de cristallisation spécifique dite en "cocons".

Selon le procédé de l'invention, on effectue la cristallisation du perborate de sodium en présence d'un polymère polycarboxylique.

On a constaté que l'incorporation au milieu de cristallisation de petites quantités d'un polymère ou copolymère organique hydrosoluble ou soluble en milieu alcalin, dont la molécule contient de façon effective ou potentielle de nombreux groupements acide carboxylique —$COO^-$, modifie fortement la morphologie des agglomérats cristallins de perborate de sodium, même en présence de quantités relativement importantes de cation magnésium.

Parmi les polymères organiques à forte teneur potentielle en groupements carboxyliques libres,les dérivés de l'anhydride maléïque ont une influence très favorable sur la cristallisation du perborate de sodium; les copolymères de l'anhydride maléïque avec un composé organique à liaison éthylénique, tel l'éthylène, le propylène, l'isobutylène, le styrène, l'éther méthoxyvinylique, le furanne... sont d'excellents agents d'amélioration des caractéristiques des cristaux du perborate de sodium.

Les macromolécules les plus efficaces sont celles dérivées d'anhydride maléïque et méthyl vinyl éther répondant à la formule:

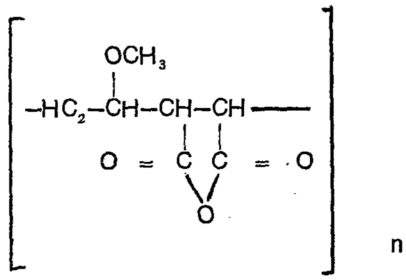

vendues sous la marque commerciale "GANTREZ". La gamme des poids moléculaires des produits commerciaux s'étend de 100.000 à 2.000.000; on utilise de préférence les produits de poids moléculaires les plus élevés supérieurs à 500.000.

Les polymères dérivés de l'éthylène et l'anhydride maléïque sont également particulièrement efficaces; ce sont des produits commerciaux vendus sous la marque "E M A", et les plus actifs sont ceux de poids moléculaires les plus élevés. Ils répondent à la formule:

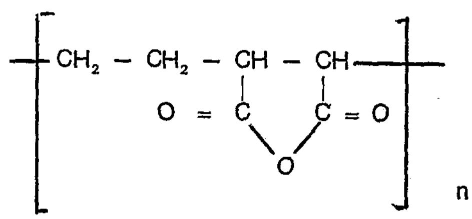

On obtient une modification intéressante de la morphologie des agglomérats cristallins de perborate de sodium avec une concentration en polymère dans le milieu de cristallisation du perborate comprise entre 10 et 1.000 mg/l, et de préférence entre 50 et 300 mg/l.

Il est donné ci-après des exemples qui illustrent l'invention à titre non limitatif.

## Exemple 1

Etude de laboratoire.

On opère en discontinu en ajoutant en quantité stoechiométrique du peroxyde d'hydrogène industriel à la concentration de 70% en poids à une solution de métaborate $BO_2Na$; la concentration de la solution mère est telle que le milieu de cristallisation contient 40 g/l de $BO_2Na$; le peroxyde d'hydrogène est ajouté en moins de trois minutes; on laisse cristalliser, sous agitation, à 20°C puis on soumet les cristaux à un essorage centrifuge et on les sèche à l'étuve à 35°C. On mesure ensuite la densité apparente de la poudre obtenue et on la soumet à un examen au microscope électonique à balayage.

Le milieu de cristallisation contient en outre des quantités variables de cation $Mg^{++}$ et d'un copolymère de l'anhydride maléïque et du méthyl vinyl éther vendu sous la marque commerciale "GANTREZ AN 169" et dont le poids moléculaire moyen est de 1.125.000. Les proportions respectives de ces deux additifs sont indiquées dans le tableau de résultats ci-dessous montrant l'évolution de la densité apparente.

| Gan 169 mg/l / $Mg^{++}$ mg/l | 0 | 20 | 50 | 100 | 200 |
|---|---|---|---|---|---|
| 0 | 0,4 | 0,55 | 0,58 | 0,63 | 0,72 |
| 10 | 0,33 | 0,50 | | 0,63 | 0,72 |
| 20 | 0,31 | | | 0,60 | |
| 50 | 0,29 | | 0,45 | 0,57 | 0,71 |
| 100 | 0,26 | | 0,33 | 0,38 | 0,53 |

Les quantités de magnésium $-Mg^{++}$ sont exprimées en mg par litre de milieu de cristallisation et les quantités de "GANTREZ" Gan mg/l sont aussi indiquées en mg par litre de milieu de cristallisation.

La première ligne du tableau montre l'augmentation de la densité apparente liée à l'augmentation de la concentration en "GANTREZ" dans le milieu de cristallisation.

La première colonne montre l'effet inverse de l'addition de quantités croissantes de $Mg^{++}$ en l'absence de "GANTREZ".

Les autres données du tableau montrent que les additions de "GANTREZ" telles que la concentration du milieu de cristallisation, soit de 100 du 200 mg/l, permettent d'obtenir des densités apparentes respectivement de 0,6 ou supérieures à 0,7 quelle que soit la concentration en $Mg^{++}$ entre 0 et 50 mg/l.

Les photographies ci-jointes obtenues sous microscope électronique à balayage montrent l'évolution de la morphologie des agglomérats cristallins pour des additions croissantes de "GANTREZ" et/ou de $Mg^{++}$.

Si on effectue la cristallisation du perborate sans aucun additif, on obtient des édifices cristallins de faibles dimensions peu résistants à l'abrasion car constitués de plaquettes agglomérées de façon désordonnée et lacunaire (photo no 1, grossissement: 150, $Mg^{++}$ 0 mg/l Gan 0 mg/l).

Dès qu'on ajoute dans le milieu, même une petite quantité de "GANTREZ", on constate que la structure devient plus compacte, moins lacunaire; les particules sont plus grosses et la densité ainsi que la résistance à l'abrasion augmente (photo no 2, grossissement: 100, $Mg^{++}$ 0 mg/l, Gan 20 mg/l et photo no 3, grossissement 100, $Mg^{++}$ 0 mg/l, Gan 100 mg/l).

Si on élève encore la concentration en "GANTREZ" jusqu'à 200 ppm, on obtient une structure compacte en "cocon"; la poudre obtenue est dure, de bonne granulométrie et résistante à l'abrasion (photo no 4, grossissement 100, $Mg^{++}$ 0 mg/l, Gan 200 mg/l).

Les photos n° 5, grossissement 300, $Mg^{++}$ 10 mg/l, Gan 0 mg/l, n° 6, grossissement 500, $Mg^{++}$ 50 mg/l, Gan 0 mg/l, n° 7, grossissement 180, $Mg^{++}$ 100 mg/l, Gan 0 mg/l, montrent l'effet d'addition croissante de $Mg^{++}$; on constate que cet additif modifie le faciès cristalline, probablement par absorption préférentielle sur l'une des faces du cristal, et de ce fait, favorise la formation de plaquettes d'épaisseur et de taille de plus en plus réduites au fur et à mesure que la concentration en $Mg^{++}$ augmente. Ces fines plaquettes s'agglomèrent en édifices désordonnés et fragiles; ces caractéristiques, peu favorables à l'obtention d'un produit commercialement valable, sont plus marquées en présence de $Mg^{++}$ que pour le perborate obtenu en milieu pur (photo n° 1).

L'addition de "GANTREZ" permet de corriger cet effet défavorable du $Mg^{++}$; les photos no 8, grossissement 150, $Mg^{++}$ 50 mg/l, Gan 50 mg/l, no 9, grossissement 100, $Mg^{++}$ 50 mg/l, Gan 100 mg/l et no 10. grossissement 100, $Mg^{++}$ 50 mg/l, Gan 200 mg/l, montrent l'effet de l'addition de quantités croissantes de "GANTREZ" à un milieu de cristallisation contenant 50 ppm de $Mg^{++}$; on constate qu'avec 100 mg/l de polymère on obtient déjà une morphologie très compacte et avec 200 mg/l on retrouve la structure en "cocon" de la photo no 4. Les photos no 11, grossissement 180, $Mg^{++}$ 100 mg/l, Gan 50 mg/l et no 12, grossissement 150, $Mg^{++}$ 100 mg/l, Gan 200 mg/l, montrent l'effet moins marqué mais évident d'additions de "GANTREZ" à un milieu de cristallisation contenant 100 mg/l de $Mg^{++}$.

Exemple 2

On opère dans un cristalliseur industriel continu de form tronconique et muni de dispositifs d'addition de réactifs de recyclage des liqueurs et de soutirage du solide tels qu'on obtienne un classement granulométrique ayant pour effet de permettre le grossissement contrôlé des fines et l'extraction d'un produit pulvérulent de granulométrie commercialement convenable. Cet appareil est décrit dans le brevet français no 1.475.801 au nom de la demanderesse.

La solution de métaborate utilisée est fabriquée à partir de minerals de bore tel que la razorite ou le tincal, et de lessive de soude: le peroxyde de l'hydrogène est la solution commercial à 70% en poids.

Si on opère à 20°C, en présence de $Mg^{++}$ à la concentration de 100 mg/l, on obtient un perborate ayant une densité apparente de 0,67—0,68.

Si on y ajoute une solution à 20 g/l de "GANTREZ AN 169" dans de l'eau mère à un débit tel que la proportion de polymère par rapport à la quantité de perborate produite soit comprise entre 150 et 200 mg/l, le perborate obtenu a une densité apparente de 0,72 — 0,75.

Exemple 3

On effectue une cristallisation au laboratoire dans les conditions de l'exemple 1 mais un remplaçant le "GANTREZ AN 169" par une polymère d'éthylène et d'anhydride maléïque vendu sous la marque commerciale "E M A 31"; on opère en présence de 50 mg/l de $Mg^{++}$ et 200 mg/l. "d'E M A". La densité apparente du perborate obtenu est de 0,73.

**Revendications**

1. Procédé de fabrication de perborate de sodium, sous forme de cristaux de forte densité apparente, de bonne résistance à l'abrasion et de dimension granulométrique resserrée et relativement élevée, par addition de peroxyde d'hydrogène à une solution de métaborate de sodium, selon lequel on effectue la cristallisation du perborate en présence d'un polymère polycarboxylique, caractérisé en ce que ledit polymère hydrosoluble ou soluble en milieu alcalin et à forte teneur potentielle en groupements carboxylique, est un dérivé de l'anhydride maléïque, à poids moléculaire élevé, de

préférence supérieur à 500.000, choisi parmi les copolymères de l'anhydride maléïque avec un composé organique à liaison éthylénique.

2. Procédé de fabrication de perborate de sodium selon la revendication 1, caractérisé en ce que le polymère est le produit de copolymérisation de la'anhydride maléïque avec le méthyl vinyléther.

3. Procédé de fabrication de perborate de sodium selon la revendication 1, caractérisé en ce que le polymère est le produit de copolymérisation de l'anhydride maléïque avec l'éthylène.

4. Procédé de fabrication de perborate de sodium selon une quelconque des revendications 1 à 3, caractérisé en ce que la concentration en polymère dans le milieu de cristallisation du perborate de sodium est comprise entre 10 et 1000 mg/l.

5. Procédé de fabrication de perborate de sodium selon une quelconque des revendications 1 à 4 caractérisé en ce que la concentration en polymère dans le milieu de cristallisation du perborate de sodium est comprise entre 50 et 300 mg/l.

**Patentansprüche**

1. Verfahren zur Herstellung von Natriumperborat in Form von Kristallen großer scheinbarer Dichte, guter Abriebbeständigkeit, enger Korngrößenverteilung und relativ großer Korngröße durch Zugabe von Wasserstoffperoxid zu einer Lösung von Natriummetaborat und unter Kristallisation des Perborats in Gegenwart eines Polycarbonsäurepolymers, dadurch gekennzeichnet, daß das wasserlösliche oder in alkalischem Medium lösliche Polymer mit großem potentiellem Gehalt an Carboxylgruppen ein Derivat des Maleinsäureanhydrids mit hohem Molekulargewicht, vorzugsweise über 500 000, ist, das unter den Copolymeren des Maleinsäureanhydrids mit einer organischen Verbindung mit äthylenischer Bindung ausgewählt ist.

2. Verfahren zur Herstellung von Natriumperborat nach Anspruch 1, dadurch gekennzeichnet, daß das Polymer das Produkt einer Copolymerisation von Maleinsäureanhydrid mit Methylvinyläther ist.

3. Verfahren zur Herstellung von Natriumperborat nach Anspruch 1, dadurch gekennzeichnet, daß das Polymer das Produkt einer Copolymerisation von Maleinsäureanhydrid mit Äthylen ist.

4. Verfahren zur Herstellung von Natriumperborat nach einem der Ansprüche 1 bis 3, dadurch gekennzeichnet, daß die Konzentration an Polymer in dem Medium der Natriumperboratkristallisation zwischen 10 und 1000 mg/l liegt.

5. Verfahren zur Herstellung von Natriumperborat nach einem der Ansprüche 1 bis 4, dadurch gekennzeichnet, daß die Konzentration an Polymer in dem Medium der Natriumperboratkristallisation zwischen 50 und 300 mg/l liegt.

**Claims**

1. Process for the production of sodium perborate in the form of crystals having high apparent density, good abrasion resistance, narrow grain size distribution and relatively big grain size, by addition of hydrogen peroxide to a solution of sodium metaborate and effecting the crystallisation of the perborate in presence of a polycarboxylic polymer, characterized in that the polymer water soluble or soluble in alkaline medium and having a great potential content of carboxylic groups is a derivative of maleic anhydride having a high molecular weight, preferably above 500 000, selected from the copolymers of the maleic anhydride with an organic compound having an ethylenic bond.

2. Process for the production of sodium perborate according to claim 1, characterized in that the polymer is the product of copolymerisation of maleic anhydride with methyl vinyl ether.

3. Process for the production of sodium perborate according to claim 1, characterized in that the polymer is the products of copolymerisation of maleic anhydride with ethylene.

4. Process for the production of sodium perborate according to one of the claims 1 through 3, characterized in that the concentration of polymer in the medium of crystallisation of sodium perborate is between 10 and 1000 mg/l.

5. Process for the production of sodium perborate according to one of the claims 1 through 4, characterized in that the concentration of polymer in the medium of crystallisation of sodium perborate is between 50 and 300 mg/l.

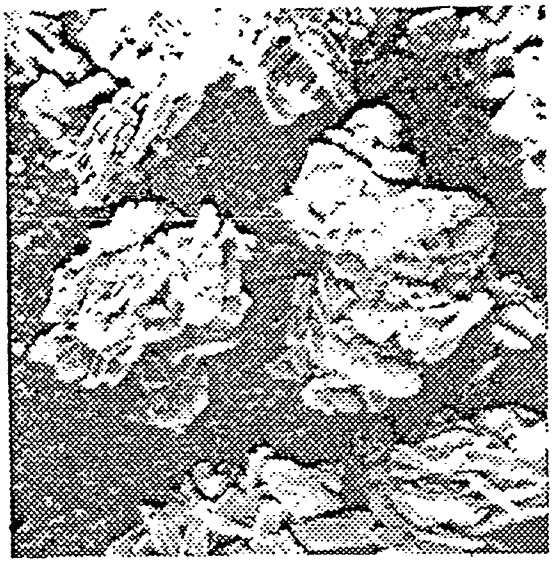

FIG_1

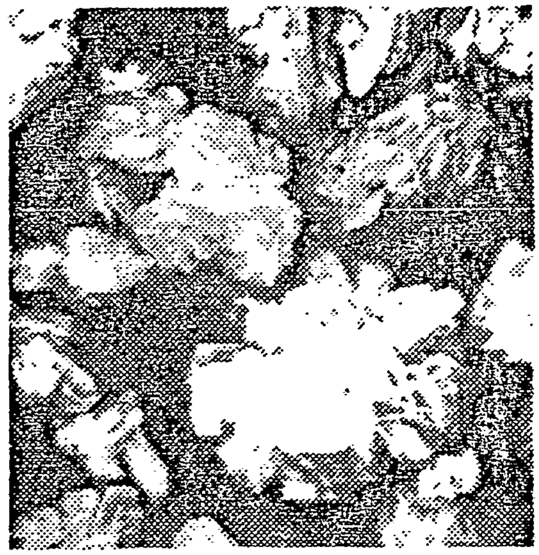

FIG_2

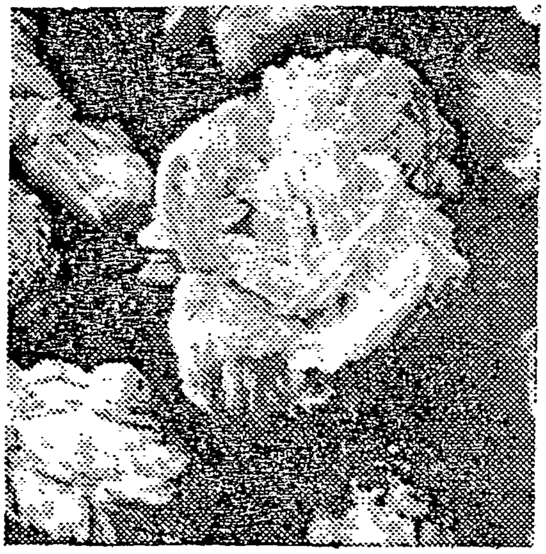

FIG_3

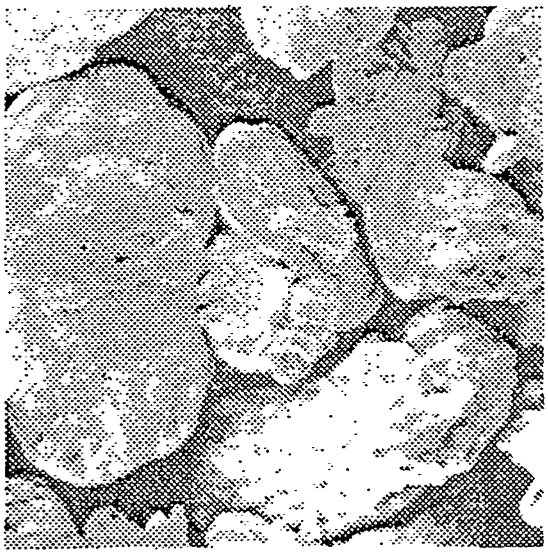

FIG_4

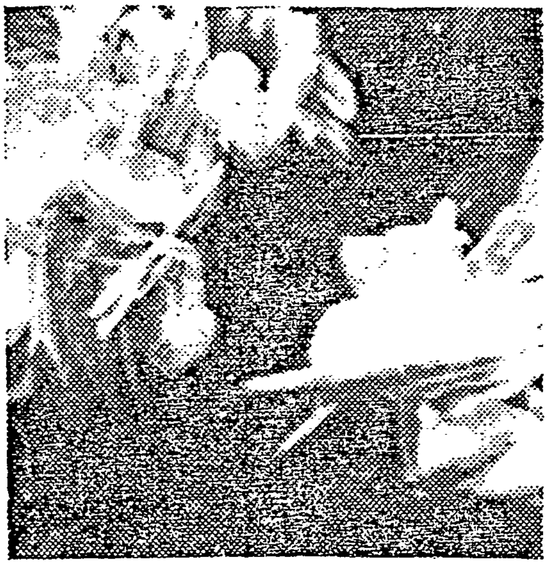

FIG_5

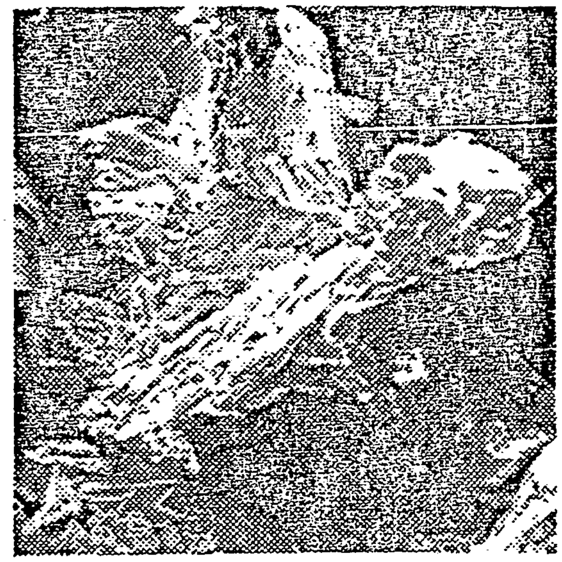

FIG_6

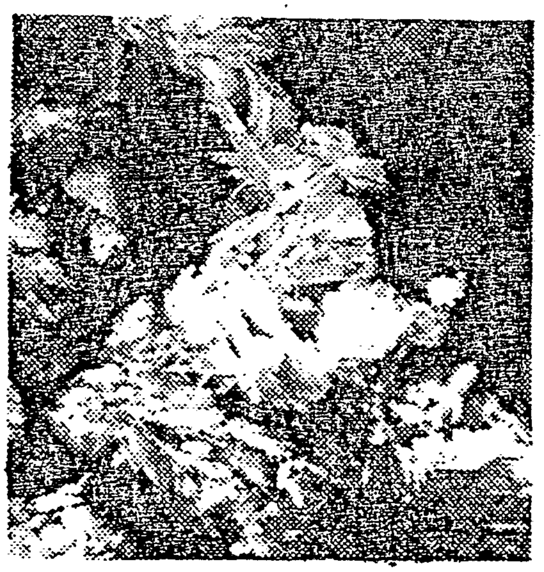

FIG_7

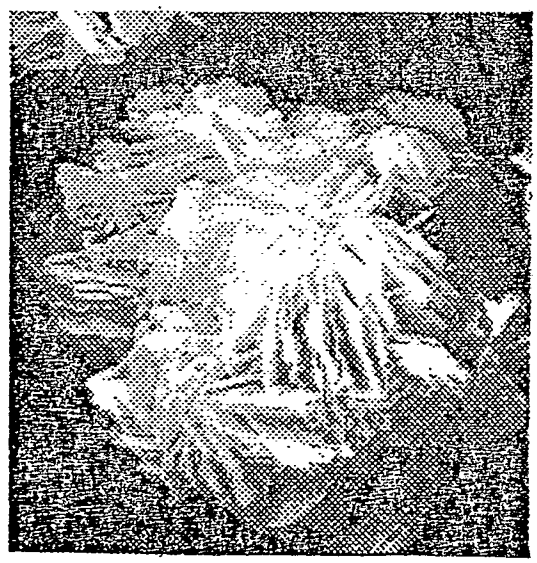

FIG_8

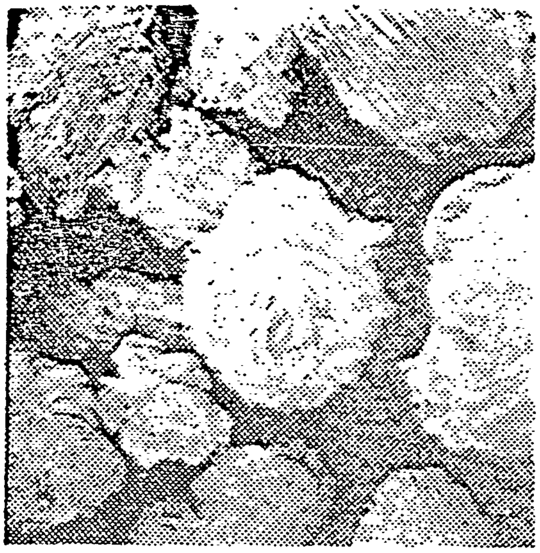

FIG_9

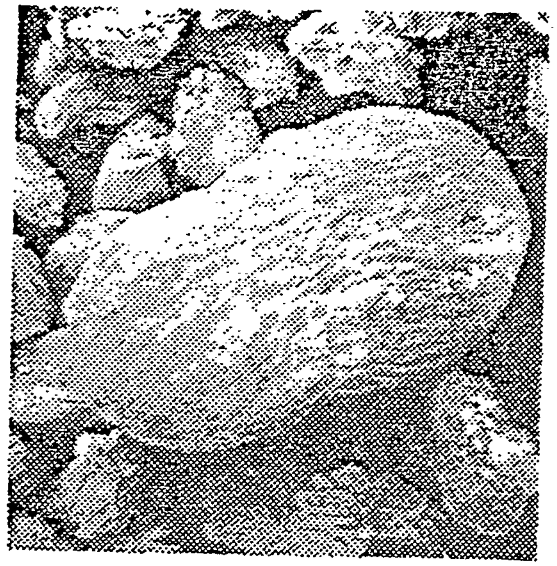

FIG_10

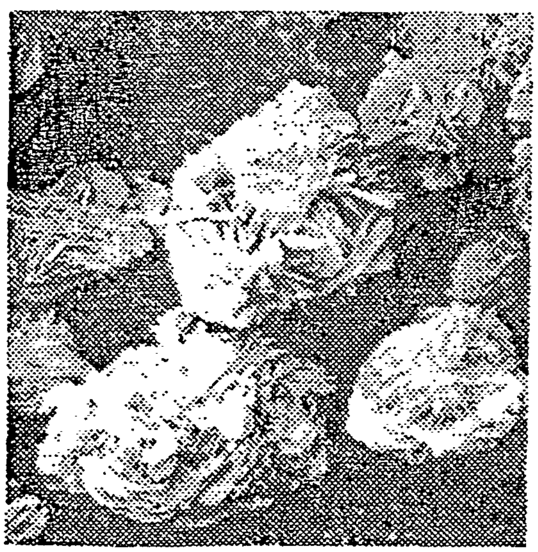

FIG_11

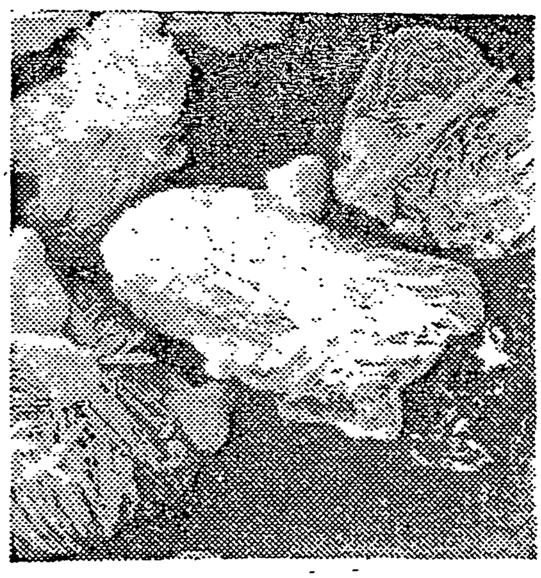

FIG_12